# EUROPEAN PATENT SPECIFICATION

(11) **EP 4 447 406 B1**
(45) Date of publication and mention of the grant of the patent: **26.08.2026**
(21) Application number: 22950016.0
(22) Date of filing: 23.09.2022
(51) Int. Cl.: H02J 7/40, H02J 7/50, H02J 7/54, H02J 7/82

(54) **ENERGY STORAGE SYSTEM, CONTROL METHOD THEREOF, DEVICE, ELECTRONIC DEVICE, AND STORAGE MEDIUM**
ENERGIESPEICHERSYSTEM, STEUERUNGSVERFAHREN DAFÜR, VORRICHTUNG, ELEKTRONISCHE VORRICHTUNG UND SPEICHERMEDIUM
SYSTÈME DE STOCKAGE D'ÉNERGIE ET PROCÉDÉ ASSOCIÉS, DISPOSITIF, DISPOSITIF ÉLECTRONIQUE ET SUPPORT DE STOCKAGE

(30) Priority: 08.07.2022 CN 202210806591
(43) Date of publication of application: 16.10.2024
(73) Proprietor: ALPHA ESS CO., LTD., Nantong, Jiangsu 226300 (CN)
(72) Inventor: SI, Xiuli, Nantong, Jiangsu 226300 (CN); LIU, Xiongjiang, Nantong, Jiangsu 226300 (CN); ZHU, Songhua, Nantong, Jiangsu 226300 (CN); SUN, Liyan, Nantong, Jiangsu 226300 (CN); JIANG, Siwei, Nantong, Jiangsu 226300 (CN); ZHANG, Haiyan, Nantong, Jiangsu 226300 (CN)
(74) Representative: Winter, Brandl - Partnerschaft mbB
(86) International application number: PCT/CN2022/120876
(87) International publication number: WO 2024/007455

(56) References cited:
- CN-A- 103 647 310
- CN-A- 114 709 896
- CN-A- 114 709 896
- CN-A- 115 065 125
- US-A1- 2009 066 291
- US-A1- 2009 066 291
- US-A1- 2019 229 540
- US-A1- 2021 006 076
- US-A1- 2021 376 629

## Description

The application claims priority from Chinese Patent Application No. 202210806591.6, filed July 8, 2022, entitled "Energy Storage System, Control Method Thereof, Device, Electronic Device, and Storage Medium".

### TECHNICAL FIELD

The present application relates to the field of energy storage technology, and more particularly to an energy storage system, control method thereof, device, electronic device, and storage medium.

### BACKGROUND

With the proliferation of new energy vehicles and the implementation of goals such as "carbon neutrality" and "carbon peak", the overall energy structure of society is shifting towards electrical energy. Energy storage systems are required in new energy vehicles, and in solar power generation and wind power generation.

In practice, energy storage systems usually consist of multiple battery devices connected with each other. To enhance the stability of energy storage systems, additional battery devices are often included, thus providing some redundancy. If a single battery device fails due to overvoltage, undervoltage, or overheating, causing the battery device to cease functioning, the entire series circuit is affected and fails to function. The situation mentioned above necessitates bypassing the malfunctioning battery devices and integrating the remaining ones into the circuit. Additionally, during charging and discharging, some battery devices may need to be bypassed, and others connected into the series circuit. It is understood that if the bypass operation and connection operation are not synchronized during use, voltage fluctuations at the output terminal of the energy storage system can occur, potentially causing the system to crash and become inoperable.

US 2021/006076 A1 discloses systems and methods that are related to a set of reconfigurable energy storage modules that can be assisted by an algorithm used to create larger energy storage systems in a flexible and efficient manner. The modules can interconnect in series, parallel or series/parallel and achieve balancing of the energy in every module while providing terminal voltage and/or current control and regulation. The modules can reconfigure on-the-fly and behave as a regular battery, a by-passing unit with a very low resistance, or a module capable of bucking or boosting voltage. This document discloses a reconfigurable energy storage module (RESM) capable of on-the-fly mode switching (e.g., bypass, battery, boost, buck) combined with an optimization algorithm to minimize power loss and enable efficient balancing in modular systems.

US 2009/066291 A1 discloses a distributed energy storage control system using BMS battery units with integrated charge/discharge bypass paths to manage series-parallel configurations, allowing online maintenance and uninterrupted operation during faults.

CN 114 709 896 A discloses a reconfigurable battery charging and discharging system that dynamically switches between series mode for high-voltage fast charging and parallel mode for high-capacity discharging, incorporating SOC-based balancing control to enhance efficiency and longevity.

CN 103 647 310 A discloses a method for achieving state-of-charge (SOC) balancing within phases of a modular multilevel converter (MMC) battery energy storage system by selectively forcing modules into active or bypass states based on SOC thresholds.

US 2021/376629 A1 discloses a large-format battery management system where battery packs are autonomously configured as master or slave units, supporting balanced charging/discharging, fault tolerance through a limp-home mode, and scalability via a communication bus like CAN.

### SUMMARY

An objective of the present application is to provide an energy storage system, control method thereof, device, electronic device, and storage medium. The invention is set out in the appended set of claims.

To achieve one of the above objectives, an embodiment of the present application provides an energy storage system, which comprises: M battery devices interconnected and a communication network, where a battery device comprises a positive electrode and a negative electrode, and a battery device comprises a storage battery, a controller, a first switch module, and a second switch module; and M controllers are configured to communicate with each other via the communication network, where M is a natural number, M ≥ 2; a positive pole of the storage battery is connected to a first terminal of the first switch module, the positive electrode and a first terminal of the second switch module are both connected to a second terminal of the first switch module, and a second terminal of the second switch module is connected to a negative pole of the storage battery; the controller is configured to control connection and disconnection between the first terminal of the first switch module and the second terminal of the first switch module and control connection and disconnection between the first terminal of the second switch module and the second terminal of the second switch module.

As a further improvement of an embodiment of the present application, the first switch module and the second switch module are switching transistors, in the first switch module and the second switch module, the first terminal is one of a collector and an emitter of a switching transistor, the second terminal is another of the collector and the emitter of the switching transistor; the controller is connected to a base of a switching transistor of the first switch module and also to a base of a switching transistor of the second switch module.

An embodiment of the present application provides a control method for a controller, which comprises: synchronizing in time with another M-1 controllers based on a communication network; acquiring first status information of a storage battery corresponding to a current controller and sending the first status information to another M-1 controllers via the communication network, and receiving second status information sent by another M-1 controllers; selecting a first main controller among M controllers based on a first predetermined algorithm, the first status information, and M-1 sets of second status information, and arranging the M controllers into a sorted queue; selecting N target controllers from the sorted queue from an end of the sorted queue towards a front of the sorted queue, and generating operation commands for the N target controllers, which are same for all N target controllers, where the operation commands are configured to characterize a bypass operation or a connection operation to the storage battery, where N is a natural number, N ≤ M; generating an operation time, and sending corresponding operation commands and the operation time to the N target controllers respectively when the current controller is the first main controller, where the operation time is later than a current time; executing operations as follows at the received operation time when the operation command and operation time are received: controlling the first switch module to be in a disconnected state and the second switch module to be in a connected state when the operation command indicates a bypass operation; controlling the first switch module to be in a connected state and the second switch module to be in a disconnected state when the operation command indicates a connection operation.

As a further improvement of an embodiment of the present application, a step of "sending corresponding operation commands and the operation time to the N target controllers respectively" specifically includes: sending corresponding operation commands and the operation time to all M controllers respectively; where operation commands for remaining M-N controllers is configured to indicate a connection operation when operation commands for the N target controllers is configured to indicate a bypass operation, and operation commands for remaining M-N controllers is configured to indicate a bypass operation when operation commands for the N target controllers is configured to indicate a connection operation.

As a further improvement of an embodiment of the present application, the first status information and the second status information include a State of Charge (SOC) value of the storage battery; a step of "selecting a first main controller among M controllers based on a first predetermined algorithm, the first status information, and M-1 sets of second status information, and arranging the M controllers into a sorted queue" specifically includes: selecting a first main controller among M controllers based on a first predetermined algorithm and SOC values of M controllers; arranging the M controllers into a sorted queue from a lowest SOC value to a highest SOC value when a corresponding storage battery is in a charging state; arranging the M controllers into a sorted queue from a highest SOC value to a lowest SOC value when a corresponding storage battery is in a discharging state; a step of "generating operation commands for the N target controllers, which are same for all N target controllers" specifically includes: generating operation commands indicating a bypass operation for the N target controllers.

As a further improvement of an embodiment of the present application, the first status information and the second status information include a health value of the storage battery, where a higher health value indicates a better condition of the storage battery; a step of "selecting a first main controller among M controllers based on a first predetermined algorithm, the first status information, and M-1 sets of second status information, and arranging the M controllers into a sorted queue" specifically includes: selecting a first main controller among M controllers based on a first predetermined algorithm and health values of M controllers; arranging the M controllers into a sorted queue from a highest health value to a lowest health value; a step of "generating operation commands for the N target controllers, which are same for all N target controllers" specifically includes: generating operation commands indicating a bypass operation for the N target controllers.

As an embodiment of the present application, a step of "synchronizing in time with another M-1 controllers based on a communication network" specifically includes: selecting a second main controller among another M-1 controllers through a second predetermined algorithm; sending a first message to the second main controller via a communication network by a current controller, with the first message including a first timestamp T1 of when the first message leaves the current controller; receiving a second message returned by the second main controller, with the second message including a second timestamp T2 of when the first message reaches the second main controller and a third timestamp T3 of when the second message leaves the second main controller, and obtaining a fourth timestamp T4 of when the current controller receives the second message; adjusting time of the current controller based on a time difference between the current controller and the second main controller which is calculated as ((T2-T1) + (T3-T4)) / 2.

As a further improvement of an embodiment of the present application, a configuration voltage of the energy storage system is V; when operation commands for the N target controllers is configured to indicate a bypass operation, a total voltage of storage batteries corresponding to remaining M-N controllers is Sum1, where |Sum1-V| ≤ error threshold; when operation commands for the N target controllers is configured to indicate a connection operation, a total voltage of storage batteries corresponding to the N target controllers is Sum2, where |Sum2-V| ≤ error threshold; where the error threshold > 0.

An embodiment of the present application provides a control device for a controller, which comprises following modules: a time synchronization module, configured to synchronize in time with another M-1 controllers based on a communication network; a selection module, configured to acquire first status information of a storage battery corresponding to a current controller and send the first status information to another M-1 controllers via the communication network, and receive second status information sent by another M-1 controllers; select a first main controller among M controllers based on a first predetermined algorithm, the first status information, and M-1 sets of second status information, and arrange the M controllers into a sorted queue; select N target controllers from the sorted queue from an end of the sorted queue towards a front of the sorted queue, and generate operation commands for the N target controllers, which are same for all N target controllers, where the operation commands are configured to characterize a bypass operation or a connection operation to the storage battery, where N is a natural number, N ≤ M; a command sending module, configured to generate an operation time and send corresponding operation commands and the operation time to the N target controllers respectively when the current controller is the first main controller, where the operation time is later than a current time; a command execution module, configured to execute operations as follows at the received operation time when the operation command and operation time are received: control the first switch module to be in a disconnected state and the second switch module to be in a connected state when the operation command indicates a bypass operation; control the first switch module to be in a connected state and the second switch module to be in a disconnected state when the operation command indicates a connection operation.

An embodiment of the present application provides an electronic device, which comprises: a memory configured to store executable instructions; a processor configured to execute the executable instructions stored in the memory to implement an aforementioned control method.

An embodiment of the present application provides a storage medium, storing executable instructions, which when executed by a processor, implement an aforementioned control method.

Compared with the prior art, the present application enhances technical effectiveness by providing an energy storage system, control method thereof, devices, electronic equipment, and storage media. The energy storage system comprises multiple interconnected battery devices and a communication network. A battery device includes a positive and negative electrode. A battery device includes a storage battery, a controller, a first switch module and a second switch module. The controllers configured to communicate with each other via the communication network. A positive pole of the storage battery is connected to a first terminal of the first switch module, the positive electrode and a first terminal of the second switch module are both connected to a second terminal of the first switch module, and a second terminal of the second switch module is connected to a negative pole of the storage battery. A controller is configured to control connection and disconnection between the first terminal of the first switch module and the second terminal of the first switch module and control connection and disconnection between the first terminal of the second switch module and the second terminal of the second switch module. The multiple battery devices are configured to facilitate simultaneous disconnection operation and connection operation.

### BRIEF DESCRIPTION OF THE DRAWINGS

FIG. 1 shows a schematic diagram of a structure of an energy storage system in an embodiment of the present application;
FIG.2 shows a flowchart of a control method in an embodiment of the present application.

### DETAILED DESCRIPTION

The following description of various embodiments of the present application is provided in conjunction with accompanying drawings. Embodiments are illustrative and do not limit the present application. The scope of the invention is defined by the appended claims.

The terms such as "above," "upper," "below," "lower," etc., used in the present application describe the spatial relative positions of one unit or feature relative to another as shown in the drawings, for ease of explanation. The terms of spatial relative positions are intended to include orientations of the device during use or operation beyond those shown in the diagrams. For instance, if the device in the diagram is flipped over, a unit described as being "below" or "under" another unit or feature would then be "above" it. Therefore, the exemplary term "below" can encompass both above and below directions. The device can be oriented differently (rotated 90 degrees or other orientations), and the spatial descriptions used herein are interpreted accordingly.

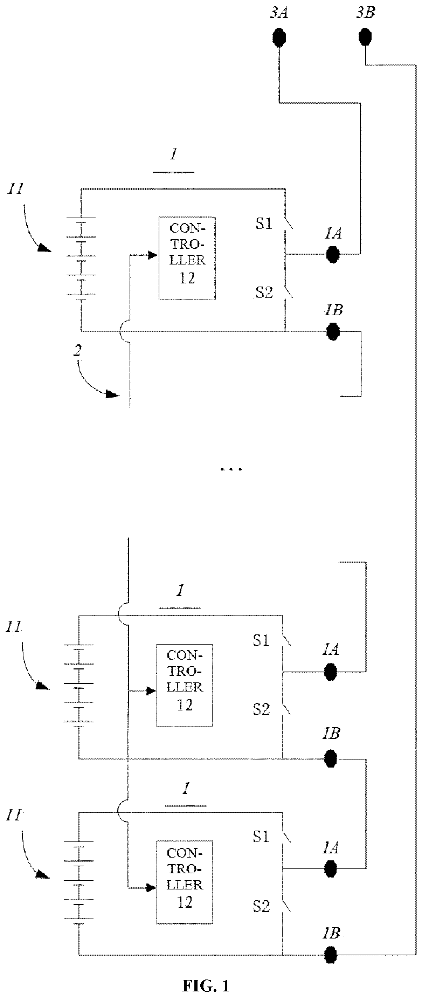

Embodiment 1 of the present application provides an energy storage system, as shown in FIG.1, comprising:
M battery devices 1 interconnected and a communication network 2. A battery device 1 includes a positive electrode 1A and a negative electrode 1B. A battery device 1 includes a storage battery 11, a controller 12, a first switch module S1, and a second switch module S2. M controllers 12 are configured to communicate with each other via the communication network 2. M is a natural number. M ≥ 2. The storage battery 11 may include multiple battery cells connected in series or parallel, forming the storage battery 11. The storage battery could be of types such as nickel-metal hydride, nickel-cadmium, or lithium batteries. The controller 12 could be a microcontroller, etc.. The communication network 2 could be an Ethernet, fiber-optic network, or CAN (Controller Area Network), etc. It is understood that the number of battery devices 1 in the energy storage system can be increased or decreased based on actual needs.

Each battery device 1 includes a controller 12. Each battery device 1 can independently control storage battery 11 therein. The energy storage system is a distributed control system. It is understood that, in the energy storage system, when a battery device 1 is damaged, simply bypass the damaged battery device 1 and the energy storage system can still function normally.

To facilitate the differentiation and management of different controllers 12, different controllers 12 can be assigned different names. Each controller 12 can be assigned a unique identifier, which can also be considered as an identifier for the battery device 1. Additionally, each controller 12 is equipped with a communication module.

A positive terminal of the storage battery 11 is connected (e.g., electrically connected) to a first terminal of the first switch module S1. A positive electrode 1A and a first terminal of the second switch module S2 are connected (e.g., electrically connected) to a second terminal of the first switch module S1. A second terminal of the second switch module S2 is connected (e.g., electrically connected) to a negative electrode of the storage battery 11.

The controller 12 is configured to control connection and disconnection between the first terminal of the first switch module S1 and the second terminal of the first switch module S1. The controller 12 is configured to control connection and disconnection between the first terminal of the second switch module S2 and the second terminal of the second switch module S2.

As shown in FIG.1, within a battery device 1, when the first switch module S1 is in a connected state and the second switch module S2 is in a disconnected state, the battery device 1 is connected to the energy storage system. When the first switch module S1 is in a disconnected state and the second switch module S2 is in a connected state, the battery device 1 is in a bypass state, meaning the battery device 1 is not connected to the energy storage system.

As shown in FIG.1, the M interconnected battery devices 1 are connected in series. For two adjacent battery devices 1, a positive electrode 1A of one battery device 1 is connected (e.g., electrically connected) to a negative electrode 1B of another battery device 1. Moreover, in this battery system formed by battery devices 1, there are also a positive output terminal 3A and a negative output terminal 3B.

In an embodiment, the first switch module and the second switch module are switching transistors. In the first switch module and the second switch module, the first terminal is one of a collector or an emitter of a switching transistor, while the second terminal is another of the collector and the emitter of the switching transistor. The controller 12 is connected (e.g., electrically connected) to a base of a switching transistor of the first switch module S1, as well as to a base of a switching transistor of the second switch module S2. The controller 12 can control a voltage at a base of a switching transistor of the first switch module and a voltage at a base of a switching transistor of the second switch module, thereby controlling the connection and disconnection between the collector and the emitter of switching transistors of the first switch module and the second switch module.

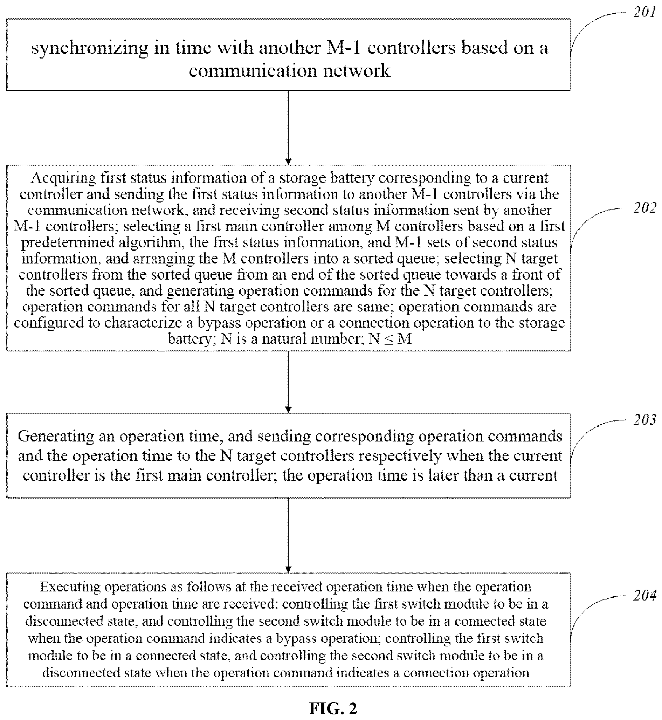

Embodiment 2 of the present application provides a control method. The control method can be implemented in the controller 12 in the Embodiment 1. The controller 12 can execute the control method at a preset interval, such as every 60 seconds, etc.. Additionally, the controller 12 continuously monitors status information (which can be or comprise status values) of corresponding storage battery 11, such as voltage, temperature, State of Charge (SOC), highest single cell voltage, lowest single cell voltage, and current, etc. When the status values are outside a predetermined range, the controller 12 can issue execution commands to any other controllers 12, thereby each controller 12 can perform the control method. In the energy storage system, there are M controllers 12, each configured to execute the control method. As shown in Figure 2, the method includes the following steps:
Step 201: synchronizing in time with another M-1 controllers 12 based on a communication network 2. In an energy storage system, each of M controllers 12 has its independent system clock. To eliminate time discrepancies among the controllers 12, time synchronization across all M controllers 12 is required.
Step 202: Acquiring first status information of a storage battery 11 corresponding to a current controller and sending the first status information to another M-1 controllers 12 via the communication network 2, and receiving second status information sent by another M-1 controllers 12. Selecting a first main controller among M controllers 12 based on a first predetermined algorithm, the first status information, and M-1 sets of second status information, and arranging the M controllers 12 into a sorted queue. Selecting N target controllers from the sorted queue from an end of the sorted queue towards a front of the sorted queue, and generating operation commands for the N target controllers. Operation commands for all N target controllers are same. Operation commands are configured to characterize a bypass operation or a connection operation to the storage battery 11. N is a natural number. N ≤ M.

In practice, a controller which executes the control method can be referred to as "the current controller." The first status information and the second status information may include a voltage of the storage battery 11, a current of the storage battery 11, and a temperature of the storage battery 11. A step of "arranging the M controllers 12 into a sorted queue based on a first predetermined algorithm, the first status information, and M-1 sets of second status information" can be understood as: processing status information of each controller 12 using a first predetermined algorithm, resulting in M scores corresponding to the M controllers 12 one-to-one; arranging the scores in an ascending order or a descending order to form a sorted queue. From the sorted queue, N controllers are selected as N target controllers for operation. For instance, based on the first status information and the second status information, scores for each storage battery 11 (corresponding to each controller and scores therefor, or serving as scores for each controller) can be determined according to quality of each storage battery 11 (higher quality results in higher scores), and the M storage batteries 11 could be arranged from a highest score to a lowest score. Subsequently, N controllers are selected for bypass operations, and remaining M-N controllers for connection operations. Moreover, during charging, based on the first status information and the second status information, each storage battery 11 can be scored based on its remaining charge (more remaining charge results in higher scores), and the M storage batteries 11 arranged from a highest score to a lowest score. N controllers are selected for connection operations, and remaining M-N for bypass operations according to the arrangement. During discharging, based on the first status information and the second status information, each storage battery 11 can be scored based on its remaining charge (more remaining charge results in higher scores), and the M storage batteries 11 arranged from a lowest score to a highest score. N controllers are selected for connection operations, and remaining M-N for bypass operations according to the arrangement.

Step 203: Generating an operation time, and sending corresponding operation commands and the operation time to the N target controllers respectively when the current controller is the first main controller. The operation time is later than a current time. The operation time for each controller is same. It is understood that when the current controller is the first main controller, it also sends an operation command and the operation time to itself. In practice, to prevent data errors while sending corresponding operation commands and the operation time to the N target controllers via communication network 2, a checksum, such as a CRC (Cyclic Redundancy Check) code, can be added to the data packet corresponding to the operation command and/or the operation time.

Step 204: Executing operations as follows at the received operation time when the operation command and operation time are received: controlling the first switch module S1 to be in a disconnected state, and controlling the second switch module S2 to be in a connected state when the operation command indicates a bypass operation; controlling the first switch module S1 to be in a connected state, and controlling the second switch module S2 to be in a disconnected state when the operation command indicates a connection operation. In practice, a timer can be set, which times out at the operation time, allowing for the immediate execution of the "operations as follows" mentioned above.

Since time synchronization has been previously implemented, each controller can execute the operation command at a same time, allowing bypass operation and connection operation to occur synchronously. The time synchronization can effectively prevent sudden voltage changes at the output terminal of the energy storage system, reducing the possibility of system downtime.

When the first switch module S1 is in a disconnected state and a step of "controlling the first switch module S1 to be in a disconnected state" needs to be implemented, no action is required. When the first switch module S1 is in a disconnected state and a step of "controlling the first switch module S1 to be in a connected state" needs to be implemented, the first switch module S1 needs to be switched to a connected state. When the first switch module S1 is in a connected state and a step of "controlling the first switch module S1 to be in a connected state" needs to be implemented, no action is required. When the first switch module S1 is in a connected state and a step of "controlling the first switch module S1 to be in a disconnected state" needs to be implemented, the first switch module S1 needs to be switched to a disconnected state. Similarly, those skilled in the art can obtain technical solutions for the second switch module S2.

In the long-term experiments conducted by the inventors, it was found that implementing any of the control methods mentioned above, time discrepancy during the execution of connection operation or bypass operation by different controllers is within 0.1ms to 10ms, which effectively prevents sudden voltage changes at the output terminal of the energy storage system, and reduces possibility of system downtime.

In an embodiment, a step of "sending corresponding operation commands and operation time to the N target controllers respectively" specifically includes: sending corresponding operation commands and the operation time to all M controllers respectively. Operation commands for remaining M-N controllers is configured to indicate a connection operation when operation commands for the N target controllers is configured to indicate a bypass operation. Operation commands for remaining M-N controllers is configured to indicate a bypass operation when operation commands for the N target controllers is configured to indicate a connection operation. In practice, the N target controllers and the remaining M-N controllers are configured to perform opposite operations.

In an embodiment, the first status information and the second status information include a State of Charge (SOC) value of the storage battery 11.

A step of "selecting a first main controller among M controllers 12 based on a first predetermined algorithm, the first status information, and M-1 sets of second status information, and arranging the M controllers 12 into a sorted queue" specifically includes: selecting a first main controller among M controllers 12 based on a first predetermined algorithm and SOC values of M controllers; arranging the M controllers 12 in a sorted queue from a lowest SOC value to a highest SOC value when a corresponding storage battery is in a charging state; arranging the M controllers 12 in a sorted queue from a highest SOC value to a lowest SOC value when a corresponding storage battery is in a discharging state.

During charging, the M controllers 12 are sorted in ascending order based on the SOC values to obtain a sorted queue, allowing storage batteries 11 with higher SOC values to be bypassed. During discharging, storage batteries 11 with lower SOC values need to be bypassed. As shown in FIG.1, when a current flows from the positive electrode 1A to the negative electrode 1B, the energy storage system is in a charging state, and the storage battery 11 is in a "charging" state (even though the storage battery 11 may be in a bypass state, it does not preclude the storage battery 11 from being considered as being in a charging state based on the state of the energy storage system). As shown in FIG.1, when a current flows from the negative electrode 1B to the positive electrode 1A, the energy storage system is in a discharging state, and the storage battery 11 is in a "discharging" state (even though the storage battery 11 may be in a bypass state, it does not preclude the storage battery 11 from being considered as being in a discharging state based on the state of the energy storage system). Therefore, each battery device 1 could be equipped with a detector to determine whether a current is flowing from the positive electrode 1A to the negative electrode 1B or from the negative electrode 1B to the positive electrode 1A, thereby determining whether the storage battery 11 is in a charging state or in a discharging state.

A step of "generating operation commands for the N target controllers, which are same for all N target controllers" specifically includes: generating operation commands indicating a bypass operation for the N target controllers.

In an embodiment, the first status information and the second status information include a health value of the storage battery 11, where a higher health value indicates a better condition of the storage battery 11. A step of "selecting a first main controller among M controllers 12 based on a first predetermined algorithm, the first status information and M-1 sets of second status information, and arranging the M controllers 12 into a sorted queue" specifically includes: selecting a first main controller among M controllers 12 based on a first predetermined algorithm and health values of M controllers; arranging the M controllers 12 into a sorted queue from a highest health value to a lowest health value.

A step of "generating operation commands for the N target controllers, which are same for all N target controllers" specifically includes: generating operation commands indicating a bypass operation for the N target controllers.

In practice, it is necessary to bypass storage batteries 11 with lower health values. Initially, multiple attributes of the storage battery 11, such as voltage and temperature, etc., are obtained. Each attribute is then scored, with attributes indicating better health of the storage battery 11 determined higher scores, and attributes indicating poorer health of the storage battery 11 determined lower scores. The attribute scores are summed to determine the health value. Optionally, different attributes can be weighted differently. Maximum scores and minimum scores for different attributes are equal, meaning the attributes share a same scoring range.

In an embodiment, a step of "synchronizing in time with another M-1 controllers 12 based on a communication network 2" includes:
Step 1: Selecting a second main controller among another M-1 controllers 12 through a second predetermined algorithm. The second predetermined algorithm can be tailored to specific needs. For instance, all M controllers might send their status information over communication network 2, allowing each controller 12 to access status information of all M controllers 12 and apply a same second predetermined algorithm to determine the second main controller. Additionally, the second main controller can be directly programmed into each controller 12.
Step 2: Sending a first message to the second main controller via a communication network 2 by a current controller, with the first message including a first timestamp T1 of when the first message leaves the current controller.
Step 3: Receiving a second message returned by the second main controller, with the second message including a second timestamp T2 of when the first message reaches the second main controller and a third timestamp T3 of when the second message leaves the second main controller. Obtaining a fourth timestamp T4 of when the current controller receives the second message.
Step 4: Adjusting time of the current controller based on a time difference between the current controller and the second main controller which is calculated as ((T2-T1) + (T3-T4)) / 2.

It is understood that sending the first message and the second message between the current controller and the second main controller also consumes time spent T, with T2-T1 including both the time spent T and the time difference, and T3-T4 including the time spent (e.g., -1*T) and the time difference, thus the time difference is ((T2-T1) + (T3-T4)) / 2.

Optionally, to enhance the integrity of the first message and the second message, a checksum, such as a CRC (Cyclic Redundancy Check) code, can be added to the first message and the second message.

In an embodiment, a configuration voltage of the energy storage system is V. When operation commands for the N target controllers is configured to indicate a bypass operation, a total voltage of storage batteries 11 corresponding to remaining M-N controllers is Sum1, where |Sum1-V| ≤ error threshold. When operation commands for the N target controllers is configured to indicate a connection operation, a total voltage of storage batteries 11 corresponding to the N target controllers is Sum2, where |Sum2-V| ≤ error threshold. The error threshold being greater than 0. In practice, a configuration voltage is set to the energy storage system, and after some storage batteries 11 are bypassed, a voltage of remaining storage batteries 11 should meet a requirement of the configuration voltage. For instance, a difference between the voltage of the remaining storage batteries 11 and the configuration voltage should be within a narrow range of [-1*error threshold, error threshold].

Embodiment 3 of the present application provides a control device. The control device can be implemented in the controller in the Embodiment 1. The control device comprises following modules:
A time synchronization module, configured to synchronize in time with another M-1 controllers 12 based on a communication network 2; the step of "synchronizing in time with another M-1 controllers 12 based on a communication network" specifically includes: selecting a second main controller among another M-1 controllers 12 through a second predetermined algorithm; sending a first message to the second main controller via a communication network 2 by a current controller, with the first message including a first timestamp T1 of when the first message leaves the current controller; receiving a second message returned by the second main controller, with the second message including a second timestamp T2 of when the first message reaches the second main controller and a third timestamp T3 of when the second message leaves the second main controller, and obtaining a fourth timestamp T4 of when the current controller receives the second message; adjusting time of the current controller based on a time difference between the current controller and the second main controller which is calculated as ((T2-T1) + (T3-T4)) / 2;
A selection module, configured to acquire first status information of a storage battery 11 corresponding to a current controller and send the first status information to another M-1 controllers 12 via the communication network 2, and receive second status information sent by another M-1 controllers 12; select a first main controller among M controllers 12 based on a first predetermined algorithm, the first status information, and M-1 sets of second status information, and arrange the M controllers 12 into a sorted queue; select N target controllers from the sorted queue from an end of the sorted queue towards a front of the sorted queue, and generate operation commands for the N target controllers, which are same for all N target controllers, where the operation commands are configured to characterize a bypass operation or a connection operation to the storage battery 11, where N is a natural number, N ≤ M;
A command sending Module, configured to generate an operation time and send corresponding operation commands and the operation time to the N target controllers respectively when the current controller is the first main controller, where the operation time is later than a current time;
A command execution module, configured to execute operations as follows at the received operation time when the operation command and operation time are received: control the first switch module S1 to be in a disconnected state and the second switch module S2 to be in a connected state when the operation command indicates a bypass operation; control the first switch module S1 to be in a connected state and the second switch module S2 to be in a disconnected state when the operation command indicates a connection operation,.
Embodiment 3 of the present application provides an electronic device, which comprises a memory configured to store executable instructions; and a processor configured to execute the executable instructions stored in the memory. The processor executes the stored executable instructions to implement a control method described in the Embodiment 1.

Embodiment 3 of the present application provides a storage medium that stores executable instructions. When the executable instruction executed by a processor, a control method described in Embodiment 1 is implemented.

It should be understood that although the specification describes embodiments, not every embodiment contains only one independent technical solution. The style of description is purely for clarity. Those skilled in the art should consider the specification as a whole; the technical solutions in various embodiments can be appropriately combined to form other embodiments that those skilled in the art can understand.

The detailed descriptions listed above are specific explanations of feasible embodiments of the present application and are not intended to limit the scope of the present application.

## Claims

1. A control method for a controller of an energy storage system, wherein the energy storage system comprises
M battery devices (1) interconnected and a communication network (2), wherein each battery device of the M battery devices (1) comprises a positive electrode (1A), a negative electrode (1B), a storage battery (11), a controller (12), a first switch module (S1), and a second switch module (S2);
the M controllers (12) of the M battery devices (1) are configured to communicate with each other via the communication network (2), where M is a natural number, M ≥ 2;
a positive pole of the storage battery (11) is connected to a first terminal of the first switch module (S1), the positive electrode (1A) and a first terminal of the second switch module (S2) are both connected to a second terminal of the first switch module (S1), and a second terminal of the second switch module (S2) is connected to a negative pole of the storage battery (11);
the controller (12) is configured to control connection and disconnection between the first terminal of the first switch module (S1) and the second terminal of the first switch module (S1) and control connection and disconnection between the first terminal of the second switch module (S2) and the second terminal of the second switch module (S2); and
the control method for the controller comprises:
synchronizing in time with another M-1 controllers (12) based on a communication network (2);
acquiring first status information of a storage battery (11) corresponding to a current controller and sending the first status information to another M-1 controllers (12) via the communication network (2), and receiving second status information sent by another M-1 controllers (12); selecting a first main controller among M controllers (12) based on a first predetermined algorithm, the first status information, and M-1 sets of second status information, and arranging the M controllers (12) into a sorted queue; selecting N target controllers from the sorted queue from an end of the sorted queue towards a front of the sorted queue, and generating operation commands for the N target controllers, which are same for all N target controllers, where the operation commands are configured to characterize a bypass operation or a connection operation to the storage battery (11), where N is a natural number, N ≤ M;
generating an operation time, and sending corresponding operation commands and the operation time to the N target controllers respectively when the current controller is the first main controller, where the operation time is later than a current time;
executing operations as follows at the received operation time when the operation command and operation time are received: controlling the first switch module (S1) to be in a disconnected state and the second switch module (S2) to be in a connected state when the operation command indicates a bypass operation; controlling the first switch module (S1) to be in a connected state and the second switch module (S2) to be in a disconnected state when the operation command indicates a connection operation; **characterized in that**
the step of "synchronizing in time with another M-1 controllers (12) based on a communication network (2)" specifically includes:
selecting a second main controller among another M-1 controllers (12) through a second predetermined algorithm;
sending a first message to the second main controller via a communication network (2) by a current controller, with the first message including a first timestamp T1 of when the first message leaves the current controller;
receiving a second message returned by the second main controller, with the second message including a second timestamp T2 of when the first message reaches the second main controller and a third timestamp T3 of when the second message leaves the second main controller, and obtaining a fourth timestamp T4 of when the current controller receives the second message; and
adjusting time of the current controller based on a time difference between the current controller and the second main controller which is calculated as ((T2-T1) + (T3-T4)) / 2.

2. The control method according to claim 1, **characterized in that**:
the first switch module (S1) and the second switch module (S2) are switching transistors, in the first switch module (S1) and the second switch module (S2), the first terminal is one of a collector and an emitter of a switching transistor, the second terminal is another of the collector and the emitter of the switching transistor;
the controller (12) is connected to a base of a switching transistor of the first switch module (S1) and also to a base of a switching transistor of the second switch module (S2).

3. The control method according to claim 1, **characterized in that** a step of "sending corresponding operation commands and the operation time to the N target controllers respectively" specifically includes:
sending corresponding operation commands and the operation time to all M controllers respectively; where operation commands for remaining M-N controllers is configured to indicate a connection operation when the operation commands for the N target controllers is configured to indicate a bypass operation; and operation commands the remaining M-N controllers is configured to indicate a bypass operation when operation commands for the N target controllers is configured to indicate a connection operation.

4. The control method according to claim 1, **characterized in that**:
the first status information and the second status information include an SOC value of the storage battery (11);
a step of "selecting a first main controller among M controllers (12) based on a first predetermined algorithm, the first status information, and M-1 sets of second status information, and arranging the M controllers (12) into a sorted queue" specifically includes: selecting a first main controller among M controllers (12) based on a first predetermined algorithm and SOC values of M controllers; arranging the M controllers (12) into a sorted queue from a lowest SOC value to a highest SOC value when a corresponding storage battery (11) is in a charging state; arranging the M controllers (12) into a sorted queue from a highest SOC value to a lowest SOC value when a corresponding storage battery (11) is in a discharging state;
a step of "generating operation commands for the N target controllers, which are same for all N target controllers" specifically includes: generating operation commands indicating a bypass operation for the N target controllers.

5. The control method according to claim 1, **characterized in that**:
the first status information and the second status information include a health value of the storage battery (11), where a higher health value indicates a better condition of the storage battery (11);
a step of "selecting a first main controller among M controllers (12) based on a first predetermined algorithm, the first status information, and M-1 sets of second status information, and arranging the M controllers (12) into a sorted queue" specifically includes: selecting a first main controller among M controllers (12) based on a first predetermined algorithm and health values of M controllers; arranging the M controllers (12) into a sorted queue from a highest health value to a lowest health value;
a step of "generating operation commands for the N target controllers, which are same for all N target controllers" specifically includes: generating operation commands indicating a bypass operation for the N target controllers.

6. The control method according to claim 3, **characterized in that**:
a configuration voltage of the energy storage system is V;
when operation commands for the N target controllers is configured to indicate a bypass operation, a total voltage of storage batteries (11) corresponding to remaining M-N controllers is Sum1, where |Sum1-V| ≤ error threshold; when operation commands for the N target controllers is configured to indicate a connection operation, a total voltage of storage batteries (11) corresponding to the N target controllers is Sum2, where |Sum2-V| ≤ error threshold; where the error threshold > 0.

7. A control device for a controller of an energy storage system, wherein the energy storage system comprises
M battery devices (1) interconnected and a communication network (2), wherein each battery device (1) of the M battery devices (1) comprises a positive electrode (1A) and a negative electrode (1B), a storage battery (11), a controller (12), a first switch module (S1), and a second switch module (S2);
the M controllers (12) of the M battery devices (1) are configured to communicate with each other via the communication network (2), where M is a natural number, M ≥ 2;
a positive pole of the storage battery (11) is connected to a first terminal of the first switch module (S1), the positive electrode (1A) and a first terminal of the second switch module (S2) are both connected to a second terminal of the first switch module (S1), and a second terminal of the second switch module (S2) is connected to a negative pole of the storage battery (11);
the controller (12) is configured to control connection and disconnection between the first terminal of the first switch module (S1) and the second terminal of the first switch module (S1) and control connection and disconnection between the first terminal of the second switch module (S2) and the second terminal of the second switch module (S2); and
the control device for the controller is **characterized by** comprising following modules:
a time synchronization module, configured to synchronize in time with another M-1 controllers (12) based on a communication network (2); wherein the time synchronization module is configured to perform the following steps:
selecting a second main controller among another M-1 controllers (12) through a second predetermined algorithm; sending a first message to the second main controller via a communication network (2) by a current controller, with the first message including a first timestamp T1 of when the first message leaves the current controller; receiving a second message returned by the second main controller, with the second message including a second timestamp T2 of when the first message reaches the second main controller and a third timestamp T3 of when the second message leaves the second main controller, and obtaining a fourth timestamp T4 of when the current controller receives the second message; adjusting time of the current controller based on a time difference between the current controller and the second main controller which is calculated as ((T2-T1) + (T3-T4)) / 2;
a selection module, configured to acquire first status information of a storage battery (11) corresponding to a current controller and send the first status information to another M-1 controllers (12) via the communication network (2), and receive second status information sent by another M-1 controllers (12); select a first main controller among M controllers (12) based on a first predetermined algorithm, the first status information, and M-1 sets of second status information, and arrange the M controllers (12) into a sorted queue; select N target controllers from the sorted queue from an end of the sorted queue towards a front of the sorted queue, and generate operation commands for the N target controllers, which are same for all N target controllers, where the operation commands are configured to characterize a bypass operation or a connection operation to the storage battery (11), where N is a natural number, N ≤ M;
a command sending module, configured to generate an operation time and send corresponding operation commands and the operation time to the N target controllers, respectively when the current controller is the first main controller, where the operation time is later than a current time;
a command execution module, configured to execute operations as follows at the received operation time when the operation command and operation time are received: control the first switch module (S1) to be in a disconnected state and the second switch module (S2) to be in a connected state when the operation command indicates a bypass operation; control the first switch module (S1) to be in a connected state and the second switch module (S2) to be in a disconnected state when the operation command indicates a connection operation.

8. The control device according to claim 7, **characterized in that**:
the first switch module (S1) and the second switch module (S2) are switching transistors, in the first switch module (S1) and the second switch module (S2), the first terminal is one of a collector and an emitter of a switching transistor, the second terminal is another of the collector and the emitter of the switching transistor;
the controller (12) is connected to a base of a switching transistor of the first switch module (S1) and also to a base of a switching transistor of the second switch module (S2).

9. An electronic device, **characterized by** comprising:
a memory configured to store executable instructions; and
a processor configured to execute the executable instructions stored in the memory to implement a control method according to any one of claims 1, 3 to 6.

10. A storage medium, **characterized by** storing executable instructions, which when executed by a processor, implement a control method according to any one of claims 1, 3 to 6.

## Patentansprüche

1. Steuerverfahren für einen Controller eines Energiespeichersystems, wobei das Energiespeichersystem Folgendes aufweist:
M miteinander verbundene Batterievorrichtungen (1) und ein Kommunikationsnetz (2), wobei jede Batterievorrichtung der M Batterievorrichtungen (1) eine positive Elektrode (1A), eine negative Elektrode (1B), eine Speicherbatterie (11), einen Controller (12), ein erstes Schaltmodul (S1) und ein zweites Schaltmodul (S2) aufweist;
wobei die M Controller (12) der M Batterievorrichtungen (1) dazu konfiguriert sind, über das Kommunikationsnetz (2) miteinander zu kommunizieren, wobei M eine natürliche Zahl ist und M ≥ 2 gilt;
wobei ein Pluspol der Speicherbatterie (11) mit einem ersten Anschluss des ersten Schaltmoduls (S1) verbunden ist, wobei die positive Elektrode (1A) und ein erster Anschluss des zweiten Schaltmoduls (S2) beide mit einem zweiten Anschluss des ersten Schaltmoduls (S1) verbunden sind, und wobei ein zweiter Anschluss des zweiten Schaltmoduls (S2) mit einem Minuspol der Speicherbatterie (11) verbunden ist;
wobei der Controller (12) dazu konfiguriert ist, eine Verbindung und Trennung zwischen dem ersten Anschluss des ersten Schaltmoduls (S1) und dem zweiten Anschluss des ersten Schaltmoduls (S1) zu steuern und eine Verbindung und Trennung zwischen dem ersten Anschluss des zweiten Schaltmoduls (S2) und dem zweiten Anschluss des zweiten Schaltmoduls (S2) zu steuern; und
wobei das Steuerverfahren für den Controller die folgenden Schritte umfasst:
zeitliches Synchronisieren mit weiteren M-1 Controller (12) auf Grundlage eines Kommunikationsnetzes (2);
Erfassen erster Statusinformationen einer Speicherbatterie (11), die einem aktuellen Controller entspricht, und Senden der ersten Statusinformationen über das Kommunikationsnetz (2) an weitere M-1 Controller (12), sowie Empfangen zweiter Statusinformationen, die von den weiteren M-1 Controller (12) gesendet werden; Auswählen eines ersten Hauptcontrollers unter M Controller (12) auf Grundlage eines ersten vorbestimmten Algorithmus, der ersten Statusinformationen und von M-1 Sätzen zweiter Statusinformationen, und Anordnen der M Controller (12) in einer sortierten Warteschlange; Auswählen von N Ziel-Controller aus der sortierten Warteschlange von einem Ende der sortierten Warteschlange in Richtung eines Anfangs der sortierten Warteschlange, und Erzeugen von Betriebsbefehlen für die N Ziel-Controller, die für alle N Ziel-Controller gleich sind, wobei die Betriebsbefehle dazu konfiguriert sind, einen Umgehungsbetrieb oder einen Verbindungsbetrieb zu der Speicherbatterie (11) zu kennzeichnen, wobei N eine natürliche Zahl ist und N ≤ M gilt;
Erzeugen einer Betriebszeit und jeweiliges Senden entsprechender Betriebsbefehle und der Betriebszeit an die N Ziel-Controller, wenn der aktuelle Controller der erste Hauptcontroller ist, wobei die Betriebszeit später als eine aktuelle Zeit ist;
Ausführen von Vorgängen wie folgt zu der empfangenen Betriebszeit, wenn der Betriebsbefehl und die Betriebszeit empfangen werden: Steuern des ersten Schaltmoduls (S1) in einen getrennten Zustand und des zweiten Schaltmoduls (S2) in einen verbundenen Zustand, wenn der Betriebsbefehl einen Umgehungsbetrieb angibt; Steuern des ersten Schaltmoduls (S1) in einen verbundenen Zustand und des zweiten Schaltmoduls (S2) in einen getrennten Zustand, wenn der Betriebsbefehl einen Verbindungsbetrieb angibt;
**dadurch gekennzeichnet, dass** der Schritt des "zeitlichen Synchronisierens mit weiteren M-1 Controller (12) auf Grundlage eines Kommunikationsnetzes (2)" konkret umfasst:
Auswählen eines zweiten Hauptcontrollers unter den weiteren M-1 Controller (12) durch einen zweiten vorbestimmten Algorithmus;
Senden einer ersten Nachricht durch einen aktuellen Controller über ein Kommunikationsnetz (2) an den zweiten Hauptcontroller, wobei die erste Nachricht einen ersten Zeitstempel T1 eines Zeitpunkts enthält, zu dem die erste Nachricht den aktuellen Controller verlässt;
Empfangen einer zweiten Nachricht, die von dem zweiten Hauptcontroller zurückgegeben wird, wobei die zweite Nachricht einen zweiten Zeitstempel T2 eines Zeitpunkts, zu dem die erste Nachricht den zweiten Hauptcontroller erreicht, und einen dritten Zeitstempel T3 eines Zeitpunkts enthält, zu dem die zweite Nachricht den zweiten Hauptcontroller verlässt, und Erhalten eines vierten Zeitstempels T4 eines Zeitpunkts, zu dem der aktuelle Controller die zweite Nachricht empfängt; und
Anpassen der Zeit des aktuellen Controllers auf Grundlage einer Zeitdifferenz zwischen dem aktuellen Controller und dem zweiten Hauptcontroller, die als ((T2-T1) + (T3-T4)) / 2 berechnet wird.

2. Steuerverfahren nach Anspruch 1, **dadurch gekennzeichnet, dass**:
das erste Schaltmodul (S1) und das zweite Schaltmodul (S2) Schalttransistoren sind, wobei in dem ersten Schaltmodul (S1) und dem zweiten Schaltmodul (S2) der erste Anschluss einer von einem Kollektor und einem Emitter eines Schalttransistors ist und der zweite Anschluss der andere von dem Kollektor und dem Emitter des Schalttransistors ist;
der Controller (12) mit einer Basis eines Schalttransistors des ersten Schaltmoduls (S1) und ferner mit einer Basis eines Schalttransistors des zweiten Schaltmoduls (S2) verbunden ist.

3. Steuerverfahren nach Anspruch 1, **dadurch gekennzeichnet, dass** ein Schritt des "Sendens entsprechender Betriebsbefehle und der Betriebszeit an die N Ziel-Controller" konkret die folgenden Schritte umfasst:
jeweiliges Senden entsprechender Betriebsbefehle und der Betriebszeit an alle M Controller; wobei Betriebsbefehle für verbleibende M-N Controller dazu konfiguriert sind, einen Verbindungsbetrieb anzugeben, wenn die Betriebsbefehle für die N Ziel-Controller dazu konfiguriert sind, einen Umgehungsbetrieb anzugeben; und Betriebsbefehle für die verbleibenden M-N Controller dazu konfiguriert sind, einen Umgehungsbetrieb anzugeben, wenn Betriebsbefehle für die N Ziel-Controller dazu konfiguriert sind, einen Verbindungsbetrieb anzugeben.

4. Steuerverfahren nach Anspruch 1, **dadurch gekennzeichnet, dass** die ersten Statusinformationen und die zweiten Statusinformationen einen SOC-Wert der Speicherbatterie (11) aufweisen;
ein Schritt des "Auswählens eines ersten Hauptcontrollers unter M Controller (12) auf Grundlage eines ersten vorbestimmten Algorithmus, der ersten Statusinformationen und von M-1 Sätzen zweiter Statusinformationen, und Anordnen der M Controller (12) in einer sortierten Warteschlange" konkret die folgenden Schritte umfasst: Auswählen eines ersten Hauptcontrollers unter M Controller (12) auf Grundlage eines ersten vorbestimmten Algorithmus und von SOC-Werten von M Controller; Anordnen der M Controller (12) in einer sortierten Warteschlange von einem niedrigsten SOC-Wert zu einem höchsten SOC-Wert, wenn sich eine entsprechende Speicherbatterie (11) in einem Ladezustand befindet; Anordnen der M Controller (12) in einer sortierten Warteschlange von einem höchsten SOC-Wert zu einem niedrigsten SOC-Wert, wenn sich eine entsprechende Speicherbatterie (11) in einem Entladezustand befindet;
ein Schritt des "Erzeugens von Betriebsbefehlen für die N Ziel-Controller, die für alle N Ziel-Controller gleich sind", konkret den folgenden Schritt umfasst: Erzeugen von Betriebsbefehlen, die einen Umgehungsbetrieb für die N Ziel-Controller angeben.

5. Steuerverfahren nach Anspruch 1, **dadurch gekennzeichnet, dass**:
die ersten Statusinformationen und die zweiten Statusinformationen einen Gesundheitswert der Speicherbatterie (11) aufweisen, wobei ein höherer Gesundheitswert einen besseren Zustand der Speicherbatterie (11) angibt;
ein Schritt des "Auswählens eines ersten Hauptcontrollers unter M Controller (12) auf Grundlage eines ersten vorbestimmten Algorithmus, der ersten Statusinformationen und von M-1 Sätzen zweiter Statusinformationen, und Anordnen der M Controller (12) in einer sortierten Warteschlange" konkret die folgenden Schritte umfasst: Auswählen eines ersten Hauptcontrollers unter M Controller (12) auf Grundlage eines ersten vorbestimmten Algorithmus und von Gesundheitswerten von M Controller; Anordnen der M Controller (12) in einer sortierten Warteschlange von einem höchsten Gesundheitswert zu einem niedrigsten Gesundheitswert;
ein Schritt des "Erzeugens von Betriebsbefehlen für die N Ziel-Controller, die für alle N Ziel-Controller gleich sind", konkret den folgenden Schritt umfasst: Erzeugen von Betriebsbefehlen, die einen Umgehungsbetrieb für die N Ziel-Controller angeben.

6. Steuerverfahren nach Anspruch 3, **dadurch gekennzeichnet, dass**:
eine Konfigurationsspannung des Energiespeichersystems V ist;
wenn Betriebsbefehle für die N Ziel-Controller dazu konfiguriert sind, einen Umgehungsbetrieb anzugeben, eine Gesamtspannung von Speicherbatterien (11), die verbleibenden M-N Controller entsprechen, Sum1 ist, wobei |Sum1-V| ≤ Fehlerschwelle gilt;
wenn Betriebsbefehle für die N Ziel-Controller dazu konfiguriert sind, einen Verbindungsbetrieb anzugeben, eine Gesamtspannung von Speicherbatterien (11), die den N Ziel-Controller entsprechen, Sum2 ist, wobei |Sum2-V| ≤ Fehlerschwelle gilt;
wobei die Fehlerschwelle > 0 ist.

7. Steuervorrichtung für einen Controller eines Energiespeichersystems, wobei das Energiespeichersystem M miteinander verbundene Batterievorrichtungen (1) und ein Kommunikationsnetz (2) umfasst, wobei jede Batterievorrichtung (1) der M Batterievorrichtungen (1) eine positive Elektrode (1A) und eine negative Elektrode (1B), eine Speicherbatterie (11), einen Controller (12), ein erstes Schaltmodul (S1) und ein zweites Schaltmodul (S2) aufweist;
wobei die M Controller (12) der M Batterievorrichtungen (1) dazu konfiguriert sind, über das Kommunikationsnetz (2) miteinander zu kommunizieren, wobei M eine natürliche Zahl ist und M ≥ 2 gilt; wobei ein Pluspol der Speicherbatterie (11) mit einem ersten Anschluss des ersten Schaltmoduls (S1) verbunden ist, wobei die positive Elektrode (1A) und ein erster Anschluss des zweiten Schaltmoduls (S2) beide mit einem zweiten Anschluss des ersten Schaltmoduls (S1) verbunden sind, und wobei ein zweiter Anschluss des zweiten Schaltmoduls (S2) mit einem Minuspol der Speicherbatterie (11) verbunden ist; wobei der Controller (12) dazu konfiguriert ist, eine Verbindung und Trennung zwischen dem ersten Anschluss des ersten Schaltmoduls (S1) und dem zweiten Anschluss des ersten Schaltmoduls (S1) zu steuern und eine Verbindung und Trennung zwischen dem ersten Anschluss des zweiten Schaltmoduls (S2) und dem zweiten Anschluss des zweiten Schaltmoduls (S2) zu steuern; und
wobei die Steuervorrichtung für den Controller **dadurch gekennzeichnet ist, dass** sie Folgendes aufweist:
ein Zeitsynchronisationsmodul, das dazu konfiguriert ist, mit weiteren M-1 Controller (12) auf Grundlage eines Kommunikationsnetzes (2) zeitlich zu synchronisieren; wobei das Zeitsynchronisationsmodul dazu konfiguriert ist, die folgenden Schritte durchzuführen:
Auswählen eines zweiten Hauptcontrollers unter weiteren M-1 Controller (12) durch einen zweiten vorbestimmten Algorithmus; Senden einer ersten Nachricht durch einen aktuellen Controller über ein Kommunikationsnetz (2) an den zweiten Hauptcontroller, wobei die erste Nachricht einen ersten Zeitstempel T1 eines Zeitpunkts enthält, zu dem die erste Nachricht den aktuellen Controller verlässt; Empfangen einer zweiten Nachricht, die von dem zweiten Hauptcontroller zurückgegeben wird, wobei die zweite Nachricht einen zweiten Zeitstempel T2 eines Zeitpunkts, zu dem die erste Nachricht den zweiten Hauptcontroller erreicht, und einen dritten Zeitstempel T3 eines Zeitpunkts enthält, zu dem die zweite Nachricht den zweiten Hauptcontroller verlässt, und Erhalten eines vierten Zeitstempels T4 eines Zeitpunkts, zu dem der aktuelle Controller die zweite Nachricht empfängt; Anpassen der Zeit des aktuellen Controllers auf Grundlage einer Zeitdifferenz zwischen dem aktuellen Controller und dem zweiten Hauptcontroller, die als ((T2-T1) + (T3-T4)) / 2 berechnet wird;
ein Auswahlmodul, das dazu konfiguriert ist, erste Statusinformationen einer Speicherbatterie (11), die einem aktuellen Controller entspricht, zu erfassen und die ersten Statusinformationen über das Kommunikationsnetz (2) an weitere M-1 Controller (12) zu senden, sowie zweite Statusinformationen zu empfangen, die von weiteren M-1 Controller (12) gesendet werden; ein erster Hauptcontroller unter M Controller (12) auf Grundlage eines ersten vorbestimmten Algorithmus, der ersten Statusinformationen und von M-1 Sätzen zweiter Statusinformationen auszuwählen, und die M Controller (12) in einer sortierten Warteschlange anzuordnen; N Ziel-Controller aus der sortierten Warteschlange von einem Ende der sortierten Warteschlange in Richtung eines Anfangs der sortierten Warteschlange auszuwählen, und Betriebsbefehle für die N Ziel-Controller zu erzeugen, die für alle N Ziel-Controller gleich sind, wobei die Betriebsbefehle dazu konfiguriert sind, einen Umgehungsbetrieb oder einen Verbindungsbetrieb zu der Speicherbatterie (11) zu kennzeichnen, wobei N eine natürliche Zahl ist und N ≤ M gilt;
ein Befehlssendemodul, das dazu konfiguriert ist, eine Betriebszeit zu erzeugen und entsprechende Betriebsbefehle und die Betriebszeit jeweils an die N Ziel-Controller zu senden, wenn der aktuelle Controller der erste Hauptcontroller ist, wobei die Betriebszeit später als eine aktuelle Zeit ist;
ein Befehlsausführungsmodul, das dazu konfiguriert ist, zu der empfangenen Betriebszeit Vorgänge wie folgt auszuführen, wenn der Betriebsbefehl und die Betriebszeit empfangen werden: das erste Schaltmodul (S1) in einen getrennten Zustand und das zweite Schaltmodul (S2) in einen verbundenen Zustand zu steuern, wenn der Betriebsbefehl einen Umgehungsbetrieb angibt; das erste Schaltmodul (S1) in einen verbundenen Zustand und das zweite Schaltmodul (S2) in einen getrennten Zustand zu steuern, wenn der Betriebsbefehl einen Verbindungsbetrieb angibt.

8. Steuervorrichtung nach Anspruch 7, **dadurch gekennzeichnet, dass**:
das erste Schaltmodul (S1) und das zweite Schaltmodul (S2) Schalttransistoren sind, wobei in dem ersten Schaltmodul (S1) und dem zweiten Schaltmodul (S2) der erste Anschluss einer von einem Kollektor und einem Emitter eines Schalttransistors ist und der zweite Anschluss der andere von dem Kollektor und dem Emitter des Schalttransistors ist;
der Controller (12) mit einer Basis eines Schalttransistors des ersten Schaltmoduls (S1) und ferner mit einer Basis eines Schalttransistors des zweiten Schaltmoduls (S2) verbunden ist.

9. Elektronische Vorrichtung, **dadurch gekennzeichnet, dass** sie Folgendes aufweist:
einen Speicher, der dazu konfiguriert ist, ausführbare Anweisungen zu speichern; und
einen Prozessor, der dazu konfiguriert ist, die in dem Speicher gespeicherten ausführbaren Anweisungen auszuführen, um ein Steuerverfahren nach einem der Ansprüche 1, 3 bis 6 zu implementieren.

10. Speichermedium, **dadurch gekennzeichnet, dass** es ausführbare Anweisungen speichert, die, wenn sie durch einen Prozessor ausgeführt werden, ein Steuerverfahren nach einem der Ansprüche 1, 3 bis 6 implementieren.

## Revendications

1. Procédé de commande d'un dispositif de commande d'un système de stockage d'énergie, dans lequel le système de stockage d'énergie comprend
M dispositifs de batterie (1) interconnectés et un réseau de communication (2), dans lequel chaque dispositif de batterie des M dispositifs de batterie (1) comprend une électrode positive (1A), une électrode négative (1B), une batterie de stockage (11), un dispositif de commande (12), un premier module de commutation (S1) et un second module de commutation (S2) ;
les M dispositifs de commande (12) des M dispositifs de batterie (1) sont configurés pour communiquer entre eux via le réseau de communication (2), M étant un nombre naturel, M ≥ 2 ;
un pôle positif de la batterie de stockage (11) est connecté à une première borne du premier module de commutation (S1), l'électrode positive (1A) et une première borne du second module de commutation (S2) sont toutes deux connectées à une seconde borne du premier module de commutation (S1), et une seconde borne du second module de commutation (S2) est connectée à un pôle négatif de la batterie de stockage (11) ;
le dispositif de commande (12) est configuré pour commander la connexion et la déconnexion entre la première borne du premier module de commutation (S1) et la seconde borne du premier module de commutation (S1), ainsi que la connexion et la déconnexion entre la première borne du second module de commutation (S2) et la seconde borne du second module de commutation (S2) ; et
le procédé de commande du dispositif de commande comprend :
la synchronisation temporelle avec M-1 autres dispositifs de commande (12) sur la base d'un réseau de communication (2) ;
l'acquisition de premières informations d'état d'une batterie de stockage (11) correspondant à un dispositif de commande courant et l'envoi des premières informations à M-1 autres dispositifs de commande (12) via le réseau de communication (2), et la réception de secondes informations d'état envoyées par M-1 autres dispositifs de commande (12) ; la sélection d'un premier dispositif de commande principal parmi M dispositifs de commande (12) en fonction d'un premier algorithme prédéterminé, des premières informations d'état et de M-1 ensembles de secondes informations d'état, et l'agencement des M dispositifs de commande (12) dans une file d'attente triée ; la sélection de N dispositifs de commande cibles dans la file d'attente triée, d'un bout à l'autre de la file d'attente triée, et la génération de commandes d'opération pour les N dispositifs de commande cibles, qui sont identiques pour l'ensemble des N dispositifs de commande cibles, dans lequel les commandes d'opération sont configurées pour caractériser une opération de contournement ou une opération de connexion à la batterie de stockage (11), N étant un nombre naturel, N ≤ M ;
la génération d'une heure d'opération et l'envoi des commandes d'opération correspondantes et de l'heure d'opération aux N dispositifs de commande cibles, respectivement, lorsque le dispositif de commande courant est le premier dispositif de commande principal, dans lequel l'heure d'opération est postérieure à l'heure courante ;
l'exécution des opérations suivantes à l'heure d'opération reçue à l'instant de réception de la commande et de l'heure d'opération : la commande du premier module de commutation (S1) pour le mettre dans un état déconnecté et du second module de commutation (S2) pour le mettre dans un état connecté lorsque la commande d'opération indique une opération de contournement ; la commande du premier module de commutation (S1) pour le mettre dans un état connecté et du second module de commutation (S2) pour le mettre dans un état déconnecté lorsque la commande d'opération indique une opération de connexion ; **caractérisé en ce que**
l'étape de « synchronisation temporelle avec M-1 autres dispositifs de commande (12) sur la base d'un réseau de communication (2) » inclut plus précisément :
la sélection d'un second dispositif de commande principal parmi M-1 autres dispositifs de commande (12) par l'intermédiaire d'un second algorithme prédéterminé ;
l'envoi d'un premier message au second dispositif de commande principal via un réseau de communication (2) par un dispositif de commande courant, le premier message incluant un premier horodatage T1 correspondant au moment où le premier message quitte le dispositif de commande courant ;
la réception d'un second message renvoyé par le second dispositif de commande principal, le second message incluant un deuxième horodatage T2 correspondant au moment où le premier message atteint le second dispositif de commande principal et un troisième horodatage T3 correspondant au moment où le second message quitte le second dispositif de commande principal, et l'obtention d'un quatrième horodatage T4 correspondant au moment où le dispositif de commande courant reçoit le second message ; et
l'ajustement de l'heure du dispositif de commande courant en fonction d'une différence de temps entre le dispositif de commande courant et le second dispositif de commande principal, qui est calculée de la manière suivante : ((T2-T1) + (T3-T4)) / 2.

2. Procédé de commande selon la revendication 1, **caractérisé en ce que** :
le premier module de commutation (S1) et le second module de commutation (S2) sont des transistors de commutation, dans le premier module de commutation (S1) et le second module de commutation (S2), la première borne est l'un d'un collecteur et d'un émetteur d'un transistor de commutation, la seconde borne est l'autre du collecteur et de l'émetteur du transistor de commutation ;
le dispositif de commande (12) est connecté à une base d'un transistor de commutation du premier module de commutation (S1) et également à une base d'un transistor de commutation du second module de commutation (S2).

3. Procédé de commande selon la revendication 1, **caractérisé en ce qu'**une étape d' « envoi des commandes d'opération correspondantes et de l'heure d'opération aux N dispositifs de commande cibles, respectivement » inclut plus précisément :
l'envoi des commandes d'opération correspondantes et de l'heure d'opération à l'ensemble des M contrôleurs, respectivement ; les commandes d'opération des M-N dispositifs de commande restants étant configurées pour indiquer une opération de connexion lorsque les commandes d'opération des N dispositifs de commande cibles sont configurées pour indiquer une opération de contournement ; et les commandes d'opération des M-N dispositifs de commande restants étant configurées pour indiquer une opération de contournement lorsque les commandes d'opération des N dispositifs de commande cibles sont configurées pour indiquer une opération de connexion.

4. Procédé de commande selon la revendication 1, **caractérisé en ce que** :
les premières informations d'état et les secondes informations d'état incluent une valeur SOC de la batterie de stockage (11) ;
une étape de « sélection d'un premier dispositif de commande principal parmi M dispositifs de commande (12) en fonction d'un premier algorithme prédéterminé, des premières informations d'état et de M-1 ensembles de secondes informations d'état, et agencement des M dispositifs de commande (12) dans une file d'attente triée » inclut plus précisément : la sélection d'un premier dispositif de commande principal parmi M dispositifs de commande (12) en fonction d'un premier algorithme prédéterminé et des valeurs SOC des M dispositifs de commande ; l'agencement des M dispositifs de commande (12) dans une file d'attente triée de la valeur SOC la plus basse à la valeur SOC la plus élevée lorsqu'une batterie de stockage correspondante (11) est en état de charge ; l'agencement des M dispositifs de commande (12) dans une file d'attente triée de la valeur SOC la plus élevée à la valeur SOC la plus basse lorsqu'une batterie de stockage correspondante (11) est en état de décharge ;
une étape de « génération de commandes d'opération pour les N dispositifs de commande cibles, qui sont identiques pour tous les N dispositifs de commande cibles » inclut plus précisément : la génération de commandes d'opération indiquant une opération de contournement pour les N dispositifs de commande cibles.

5. Procédé de commande selon la revendication 1, **caractérisé en ce que** :
les premières informations d'état et les secondes informations d'état incluent une valeur d'intégrité de la batterie de stockage (11), une valeur d'intégrité plus élevée indiquant un meilleur état de la batterie de stockage (11) ;
une étape de « sélection d'un premier dispositif de commande principal parmi M dispositifs de commande (12) sur la base d'un premier algorithme prédéterminé, des premières informations d'état et de M-1 ensembles de secondes informations d'état, et agencement des M dispositifs de commande (12) dans une file d'attente triée » inclut plus précisément : la sélection d'un premier dispositif de commande principal parmi M dispositifs de commande (12) sur la base d'un premier algorithme prédéterminé et des valeurs d'intégrité des M dispositifs de commande ; l'agencement des M dispositifs de commande (12) dans une file d'attente triée de la valeur d'intégrité la plus élevée à la valeur d'intégrité la plus basse ;
une étape de « génération de commandes d'opération pour les N dispositifs de commande cibles, qui sont identiques pour tous les N dispositifs de commande cibles » inclut plus précisément : la génération de commandes d'opération indiquant une opération de contournement pour les N dispositifs de commande cibles.

6. Procédé de commande selon la revendication 3, **caractérisé en ce que** :
une tension de configuration du système de stockage d'énergie est V ;
lorsque les commandes d'opération des N dispositifs de commande cibles sont configurées pour indiquer une opération de contournement, une tension totale des batteries de stockage (11) correspondant aux M-N dispositifs de commande restants est Sum1, dans lequel |Sum1-V| ≤ seuil d'erreur ; lorsque les commandes d'opération des N dispositifs de commande cibles sont configurées pour indiquer une opération de connexion, une tension totale des batteries de stockage (11) correspondant aux N dispositifs de commande cibles est Sum2, dans lequel |Sum2-V| ≤ seuil d'erreur ; dans lequel le seuil d'erreur > 0.

7. Dispositif de commande pour un dispositif de commande d'un système de stockage d'énergie, dans lequel le système de stockage d'énergie comprend
M dispositifs de batterie (1) interconnectés et un réseau de communication (2), dans lequel chaque dispositif de batterie (1) des M dispositifs de batterie (1) comprend une électrode positive (1A) et une électrode négative (1B), une batterie de stockage (11), un dispositif de commande (12), un premier module de commutation (S1) et un second module de commutation (S2) ;
les M dispositifs de commande (12) des M dispositifs de batterie (1) sont configurés pour communiquer entre eux via le réseau de communication (2), dans lequel M est un nombre naturel, M ≥ 2 ;
un pôle positif de la batterie de stockage (11) est connecté à une première borne du premier module de commutation (S1), l'électrode positive (1A) et une première borne du second module de commutation (S2) sont toutes deux connectées à une seconde borne du premier module de commutation (S1), et une seconde borne du second module de commutation (S2) est connectée à un pôle négatif de la batterie de stockage (11) ;
le dispositif de commande (12) est configuré pour commander la connexion et la déconnexion entre la première borne du premier module de commutation (S1) et la seconde borne du premier module de commutation (S1), ainsi que la connexion et la déconnexion entre la première borne du second module de commutation (S2) et la seconde borne du second module de commutation (S2) ; et
le dispositif de commande destiné au dispositif de commande est **caractérisé en ce qu'**il comprend les modules suivants :
un module de synchronisation temporelle, configuré pour se synchroniser en temps avec M-1 autres dispositifs de commande (12) sur la base d'un réseau de communication (2) ; dans lequel le module de synchronisation temporelle est configuré pour effectuer les étapes suivantes :
la sélection d'un second dispositif de commande principal parmi M-1 autres dispositifs de commande (12) par l'intermédiaire d'un second algorithme prédéterminé ; l'envoi d'un premier message au second dispositif de commande principal via un réseau de communication (2) par un dispositif de commande courant, le premier message incluant un premier horodatage T1 correspondant au moment où le premier message quitte le dispositif de commande courant ; la réception d'un second message renvoyé par le second dispositif de commande principal, le second message incluant un deuxième horodatage T2 correspondant au moment où le premier message atteint le second dispositif de commande principal et un troisième horodatage T3 correspondant au moment où le second message quitte le second dispositif de commande principal, et l'obtention d'un quatrième horodatage T4 correspondant au moment où le dispositif de commande courant reçoit le second message ; l'ajustement de l'heure du dispositif de commande courant en fonction de la différence de temps entre le dispositif de commande courant et le second dispositif de commande principal, qui est calculée de la manière suivante : ((T2-T1) + (T3-T4)) / 2 ;
un module de sélection, configuré pour acquérir des premières informations d'état d'une batterie de stockage (11) correspondant à un dispositif de commande courant et envoyer les premières informations d'état à M-1 autres dispositifs de commande (12) via le réseau de communication (2), et recevoir des secondes informations d'état envoyées par M-1 autres dispositifs de commande (12) ; sélectionner un premier dispositif de commande principal parmi les M dispositifs de commande (12) en fonction d'un premier algorithme prédéterminé, des premières informations d'état et de M-1 ensembles de secondes informations d'état, et agencer les M dispositifs de commande (12) dans une file d'attente triée ; sélectionner N dispositifs de commande cibles dans la file d'attente triée, d'un bout à l'autre de la file d'attente triée, et générer des commandes d'opération identiques pour les N dispositifs de commande cibles, qui sont identiques pour l'ensemble des N dispositifs de commande cibles, les commandes d'opération étant configurées pour caractériser une opération de contournement ou une opération de connexion à la batterie de stockage (11), dans lequel N est un nombre naturel, N ≤ M ;
un module d'envoi de commandes, configuré pour générer une heure d'opération et envoyer les commandes d'opération correspondantes et l'heure d'opération aux N dispositifs de commande cibles, respectivement, lorsque le dispositif de commande courant est le premier dispositif de commande principal, dans lequel l'heure d'opération est postérieure à une heure courante ;
un module d'exécution de commandes, configuré pour exécuter les opérations suivantes à l'heure d'opération reçue lorsque la commande d'opération et l'heure d'opération sont reçues : la commande du premier module de commutation (S1) pour le mettre dans un état déconnecté et du second module de commutation (S2) pour le mettre dans un état connecté lorsque la commande d'opération indique une opération de contournement ; la commande du premier module de commutation (S1) pour le mettre dans un état connecté et du second module de commutation (S2) pour le mettre dans un état déconnecté lorsque la commande d'opération indique une opération de connexion.

8. Dispositif de commande selon la revendication 7, **caractérisé en ce que** :
le premier module de commutation (S1) et le second module de commutation (S2) sont des transistors de commutation, dans le premier module de commutation (S1) et le second module de commutation (S2), la première borne est l'un d'un collecteur et d'un émetteur d'un transistor de commutation, la seconde borne est l'autre du collecteur et de l'émetteur du transistor de commutation ;
le dispositif de commande (12) est connecté à une base d'un transistor de commutation du premier module de commutation (S1) et également à une base d'un transistor de commutation du second module de commutation (S2).

9. Dispositif électronique, **caractérisé en ce qu'**il comprend :
une mémoire configurée pour stocker des instructions exécutables ; et
un processeur configuré pour exécuter les instructions exécutables stockées dans la mémoire afin de mettre en œuvre un procédé de commande selon l'une quelconque des revendications 1, 3 à 6.

10. Support de stockage, **caractérisé par** le stockage d'instructions exécutables qui, lorsqu'elles sont exécutées par un processeur, mettent en œuvre un procédé de commande selon l'une quelconque des revendications 1, 3 à 6.
